# EUROPÄISCHE PATENTSCHRIFT

(11) **EP 2 048 553 B1**
(45) Veröffentlichungstag und Bekanntmachung des Hinweises auf die Patenterteilung: **27.10.2010**
(21) Anmeldenummer: 07019982.3
(22) Anmeldetag: 12.10.2007
(51) Int. Cl.: G05B 13/04

(54) **Regelkreis zur Regelung eines Prozesses, insbesondere Verbrennungsprozesses**
Control circuit for regulating a process, in particular a combustion process
Circuit régulateur destiné au réglage d'un processus, en particulier d'un processus de combustion

(43) Veröffentlichungstag der Anmeldung: 15.04.2009
(73) Patentinhaber: Powitec Intelligent Technologies GmbH, 45219 Essen (DE)
(72) Erfinder: Wintrich, Franz, 45309 Essen (DE); Stephan, Volker, Dr., 99976 Hüpstedt (DE); Müller, Steffen, 07381 Bodelwitz (DE)
(74) Vertreter: Patentanwälte Hosenthien-Held und Dr. Held

(56) Entgegenhaltungen:
- EP-A- 1 052 558
- EP-A- 1 396 770
- WO-A-02/077527
- US-A1- 2006 257 237

## Beschreibung

Die Erfindung betrifft einen Regelkreis zur Regelung eines Prozesses, insbesondere Verbrennungsprozesses, mit den Merkmalen des Oberbegriffs des Anspruches 1.

Bei einem bekannten Regelkreis dieser Art werden im Regler im wesentlichen Messdaten über Massenströme, Temperaturverteilungen und Flammenbilder verarbeitet. Um bessere Ergebnisse der Regelung zu erzielen, ist es sinnvoll, zunächst möglichst viele Informationen über den Zustand des Systems zu erhalten. Die Daten liegen als Skalare vor. Mittels eines neuronalen Netzes werden hieraus Prognosen für künftige Zustände errechnet. Je nach Anlage kann sich herausstellen, dass eine Reduktion auf geringere Datenmenge sinnvoll wäre, um Rechnerkapazität für längerfristigere Prognosen zur Verfügung zu haben.

Ein Regelkreis der eingangs genannten Art ist in der EP 1 052 558 A1 offenbart. Das verwendete Prozessmodell arbeitet mit Skalaren, wobei sowohl für die vorangegangenen Zustände als auch für die prognostizierten Zustände mit einem Maß für die Genauigkeit versehen werden.

Der vorliegenden Erfindung liegt die Aufgabe zugrunde, einen Regelkreis der eingangs genannten Art zu verbessern. Diese Aufgabe wird durch einen Regelkreis mit den Merkmalen des Anspruches 1 gelöst. Weitere vorteilhafte Ausgestaltungen sind Gegenstand der Unteransprüche.

Dadurch, dass der Regler aus wenigstens einer Wahrscheinlichkeitsverteilung der Observationswerte mittels eines Prozessmodells eine Menge von Verteilungen wahrscheinlicher künftiger Zustände des Systems prognostiziert, diese anhand der Zielwerte und/oder deren Verteilungen bewertet und wenigstens eine Wahrscheinlichkeitsverteilung der geeigneten Aktionswerte auswählt., können stochastische Aspekte des Prozesses berücksichtigt werden. Es werden nicht nur einzelne, skalare Mittelwerte behandelt, sondern mit den Wahrscheinlichkeitsverteilungen lassen sich sowohl die jeweils wahrscheinlichsten Mess- und Prognosewerten als auch die Unsicherheit der jeweiligen Prognose abschätzen. Ein Absuchen von Zuständen in voller Breite aller möglichen Werte wird durch eine gezielte Verwendung weniger charakteristischer Werte der Wahrscheinlichkeitsverteilungen ersetzt. Die Regelung wird dadurch besser, insbesondere genauer und schneller. Die Verwendung einer solchen Bayes'schen Statistik hat bislang noch keinen Eingang in die Verfahrentechnik oder die neuronalen Netze gefunden. Der Speicherbedarf für die Wahrscheinlichkeitsverteilungen kann durch geeignete Approximationen verringert werden. Die Einheiten des Regler können logische oder bauliche Einheiten sein.

Die Erfindung kann bei verschiedenen stationären thermodynamischen Anlagen, insbesondere Kohle-, Öl- oder Gaskraftwerken, Müllverbrennungs-, Mülltrennung-oder Müllsorlieranlagen und Zementwerken, eingesetzt werden.

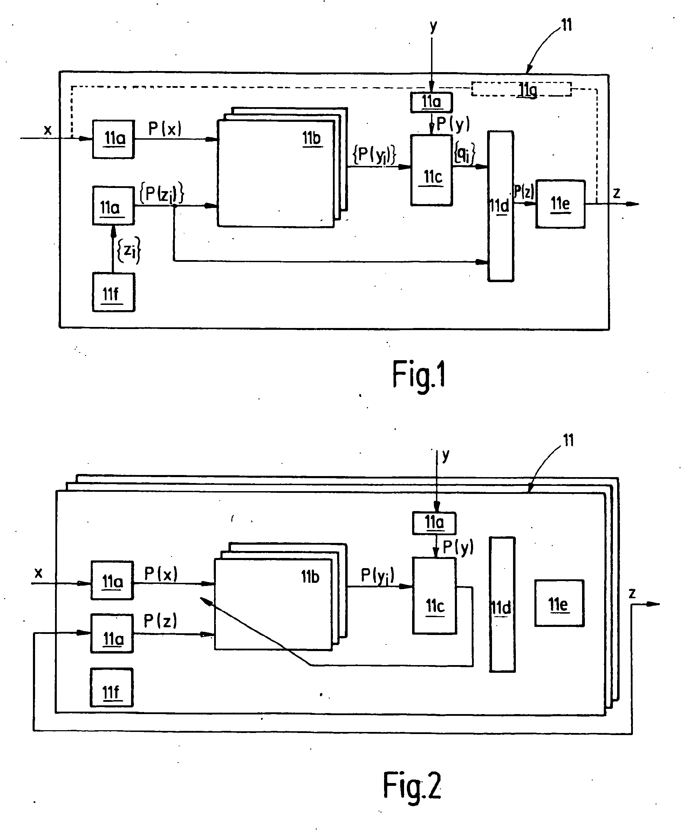

Im folgenden ist die Erfindung anhand eines in der Zeichnung dargestellten Ausfuhrungsbeispiels näher erläutert. Es zeigen
- Fig. 1: ein Blockschaltbild eines Reglers im Betrieb,
- Fig. 2: ein Blockschaltbild des Reglers im Training

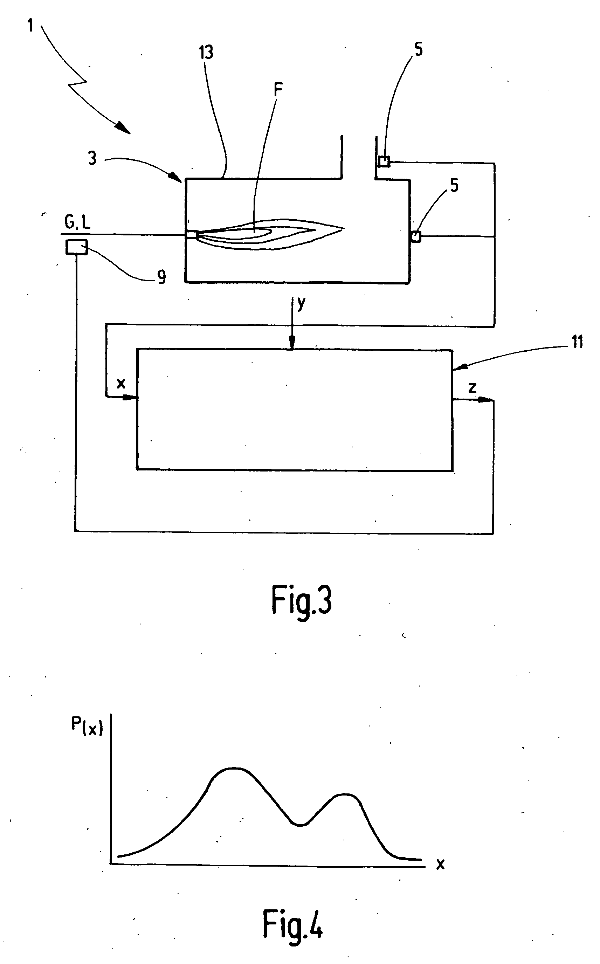

- Fig. 3: eine schematische Darstellung des Ausführungsbeispiels, und
- Fig. 4: eine schematische Darstellung einer Wahrscheinlichkeitsverteilung.

Im Ausführungsbeispiel ist eine Anlage 1 vorgesehen, welche mittels eines Regelkreises geregelt werden soll. Die Anlage 1 umfasst eine (Regel)Strecke 3, wenigstens eine, vorzugsweise mehrere verschiedene Messvorrichtungen 5, welche Messdaten der Strecke 3 erfassen, wenigstens eine, vorzugsweise mehrere verschiedene Stellvorrichtungen 9, welche auf die Strecke 3 einwirken können, und einen Regler 11, an welchen die Messvorrichtung(en) 5 und Stellvorrichtung(en) 9 angeschlossen sind, wodurch der Regelkreis gebildet wird.

Der Strecke 3 wird umzusetzendes Material, kurz als Gut G bezeichnet, beispielsweise Brennstoffe wie Kohle, Öl, Gas, sonstige Primärbrennstoffe, Müll oder sonstige Sekundärbrennstoffe (außerdem im Falle von Zementwerken Kalk), sowie Primärluft (bzw. -sauerstoff) und Sekundärluft (bzw. -sauerstoff), kurz als Luft L bezeichnet, zugeführt, wobei diese Zufuhr durch die vom Regler 11 ansteuerbaren Stellvorrichtungen 9 gesteuert wird. Als Kernstück der Strecke 3 ist ein Ofen 13 vorgesehen, in welchem ein Verbrennungsprozess stattfindet. Die Messvorrichtungen 5 erfassen so viele Messwerte der Strecke 3 wie möglich, beispielsweise Bilder des durch den Verbrennungsprozesses erzeugten Flammenkörpers F, gegebenenfalls Emissionen der Wände des Ofens 13, sonstige Wärmebilder, Temperaturen, Drücke, Massenströme des Gutes G, der Luft L, im Falle von Zementwerken des abkühlenden Zementes und der Abgase, Schadstoffkonzentrationen in den Abgases und im Falle von Zementwerken als Qualitätsmaß für den Zement die Konzentration des Freikalks (FCAO).

Der Regler 11 weist wenigstens einen, vorzugsweise mehrere Eingangswandler 11a, eine Prozessmodelleinheit 11b, eine Bewertereinheit 11c, eine Auswahleinheit 11d, einen Ausgangswandler 11e und einen Aktions-Generator 11f auf. Vorzugsweise weist der Regler 11 noch eine konventionelle Regeleinheit 11g auf, welche den anderen genannten Bestandteilen parallel geschaltet ist.

Die Messwerte der Messvorrichtungen 5, im folgenden als Observationswerte x bezeichnet, beschreiben als Zustandsvariablen zeitabhängig den Ist-Zustand des Systems, d.h. es gilt x = x(t). Im zugeordneten Eingangswandler 11a werden aus diesen zeitabhängigen Observationswerten x Wahrscheinlichkeitsverteilungen P = P(x) gebildet. Im einfachsten Fall wird hierzu der relevante Wertebereich eines Observationswertes x, beispielsweise eine Temperatur im Ofen 13, in einzelnen Stufen unterteilt, über ein bestimmtes Zeitintervall dieser Observationswert x gemessen und P(x) als Häufigkeit der einzelnen gemessenen x(t) über die einzelnen Stufen ermittelt (Histogramm mit Stützstellen). Im einfachsten Fall eines im Mittel konstanten Observationswertes x ergibt sich aufgrund von Fluktuationen und sonstigen statistischen Phänomenen eine diskretisierte Gauß'sche Normalverteilung. Der Ist-Zustand des Systems wird nun durch die Gesamtheit der Wahrscheinlichkeitsverteilungen P = P(x) beschrieben und in die Prozessmodelleinheit 11b gegeben, wo wenigstens ein Prozessmodell, vorzugsweise mehrere miteinander konkurrierenden Prozessmodelle, gespeichert ist, vorzugsweise als neuronales Netz implementiert.

Ein Aktions-Generator 11f erzeugt eine Menge {zᵢ} möglicher Aktionswerte. Diese können zufällig (Monte Carlo) oder anhand einer Evoluationsstrategie ausgewählt werden. Aus der Menge {zᵢ} möglicher Aktionswerte bildet ein weiterer (oder der gleiche) Eingangswandler 11a eine Menge {P(zᵢ)} zugeordneter Verteilungen. Diese Verteilungen werden auf die gleiche Weise wie diejenigen der Observationswerte x ermittelt. Die Menge {P(zᵢ)} der den möglichen Aktionswerten zugeordneten Verteilungen wird ebenfalls in die Prozessmodelleinheit 11b gegeben.

Mittels des in der Prozessmodelleinheit 11b enthaltenen, sogenannten Bayesschen Prozessmodells, welches auf eine später beschriebene Weise ursprünglich trainiert und vorzugsweise laufend verbessert wird, werden aus den Verteilungen P(x) und {P(zᵢ)} Prognosen über wahrscheinliche künftige (Ist-)Zustände des Systems getroffen, die in Form einer Menge {P(yᵢ)} zugeordneter Verteilungen ausgedrückt und in eine Bewertereinheit 11c gegeben werden. Zielwerte y, d.h. vorgegebene Sollwerte und weitere Optimierungsziele, beispielsweise ein geringerer Verbrauch an Primärbrennstoff oder an Rückständen arme Abgase, insbesondere geringe Schadstoffkonzentrationen, werden direkt oder vorzugsweise nach Umwandlung in eine Wahrscheinlichkeitsverteilung P = P(y) ebenfalls in die Bewertereinheit 11c gegeben. Die Bewertereinheit 11c bewertet die Menge {P(yᵢ)} von Verteilungen wahrscheinlicher künftiger Zustände des Systems in Hinblick auf die Wahrscheinlichkeitsverteilung P(y) der Zielwerte y. Die einzelne Bewertung kann durch eine Qualität qᵢ ausgedrückt werden, beispielsweise ein Skalar, so dass die Bewertereinheit 11c eine Menge {qᵢ} von Qualitäten ausgibt. Die Auswahleinheit 11d wählt die maximale Qualität qᵢ, in der Regel das qᵢ mit dem größten Zahlenwert, aus und nimmt aus der Menge {P(zᵢ)} die für dieses qᵢ ursächliche Verteilung als geeignete Wahrscheinlichkeitsverteilung P = P(z) von Aktionswerten z, welche den Zustand des System näher an die Zielwerte y bzw. P(y) bringen sollen.

Im Ausgangswandler 11e werden die Wahrscheinlichkeitsverteilungen P = P(z) der Aktionswerte z einzelne Aktionswerte z gebildet, denen konkrete Aktionen zugeordnet sind und aufgrund denen dann die angesteuerten Stellvorrichtungen 9 die zugeordneten Aktionen ausführen. Der Regelkreis ist damit geschlossen. Im einfachsten Fall einer Gauß'schen Normalteilung P =P(z), beispielsweise für eine Ventilstellung, ergibt sich eine dem Scheitelwert entsprechende, konkrete Ventilstellung. Es kann auch der Flächenschwerpunkt oder dergleichen verwendet werden. In einem komplizierteren Fall wird sich eine Stellsequenz ergeben, d.h. eine aufeinander abgestimmte Abfolge von Aktionswerten z.

Die gegebenenfalls zusätzlich vorgesehene, konventionelle Regeleinheit 11g kann für einzelne Stellvorrichtungen 9 oder als Ersatz für den Notfall oder für sonstige Fälle einen Teil der Regelung übernehmen und dabei Eingangswandler 11a, Prozessmodelleinheit 11b, Bewertereinheit 11c, Auswahleinheit 11d und Ausgangswandler 11e sowie Aktions-Generator 11f überbrücken.

Die Verwendung der Wahrscheinlichkeitsverteilung P ermöglicht eine bessere Berücksichtigung von stochastischen Aspekte und Eigenschaften, d.h. außer einem einzelnen Wert, beispielsweise dem wahrscheinlichsten Prognosewert, sind auch die zugehörigen Unsicherheiten enthalten, beispielsweise die Streuung dieses Prognosewertes. Vorzugsweise ist das Prozessmodell für die Wahrscheinlichkeitsverteilungen so aufgebaut, dass eine iterative Anwendung des Prozessmodells für Mehrschrittprognosen und eine bidirektionale Anwendung für Vorwärts- und parallele Rückwärtsrechnungen möglich ist. Mit der Kenntnis der Streuung sind auch sinnvolle Abbruchkriterien für die Mehrschrittprognosen möglich.

Aufgrund der hochgradig nichtlinearen Verhältnisse im System wird in der Regel nicht die Gauß'sche Normalverteilung auftreten, sondern jeweils eine kompliziertere Wahrscheinlichkeitsverteilung P, welche durchaus mehrere lokale Maxima aufweisen kann.

Da mit der vorliegenden Erfindung gezielter Observationswerte x ausgewertet und Aktionswerte z ausgesucht werden können, ist eine schnellere Annäherung an die Zielwerte y möglich.

Um das Prozessmodell in der Prozessmodelleinheit 11b zu trainieren, werden die Observationwerte x und die tatsächlichen Aktionswerte z in den zugeordneten Eingangswandlern 11a in Verteilungen P(x) und P(z) umgewandelt, welche in die Prozessmodelleinheit 11b gegeben werden. Die Menge {P(yᵢ)} von Verteilungen wahrscheinlicher künftiger Ist-Zustände des Systems wird ebenso wie die Verteilung P(y) der Zielwerte y in die Bewertereinheit 11c gegeben. Der ermittelte Prognosefehler wird in an sich bekannter Weise dazu verwendet, dass das Prozessmodell anzupassen, beispielsweise die Verknüpfungen im neuronalen Netz anzupassen. Es ist möglich, dass miteinander konkurrierende Prozessmodelle und/oder miteinander konkurrierende Regler gleichzeitig trainiert werden.

Die sehr hochdimensionalen Wahrscheinlichkeitsverteilungen (Wahrscheinlichkeitsdichteverteilungen) sollten für eine sinnvolle Verarbeitung nicht hochaufgelöst gespeichert werden, sondern approximiert werden, beispielsweise durch parametrische Wahrscheinlichkeitsverteilungen (Kennzeichnung durch wenige charakteristische Parameter), durch "Graphical Models" (Kennzeichnung durch wenige Funktionen aus einem Funktionensystem), durch einen Partikelfilter (Monte Carlo Verfahren) oder durch das verwendete neuronale Netz (z.B. Radiale-Basis-Funktionen-Netz) gespeichert werden.

### Bezugszeichenliste

- 1: Anlage
- 3: Strecke
- 5: Messvorrichtung
- 9: Stellvorrichtung
- 11: Regler
- 11a: Eingangswandler
- 11b: Prozessmodelleinheit
- 11c: Bewertereinheit
- 11d: Auswahleinheit
- 11e: Ausgangswandler
- 11f: Aktions-Generator
- 11g: konventionelle Regelreinheit
- 13: Ofen
- F: Flammenkörper
- G: Gut
- L: Luft
- P: Wahrscheinlichkeitsverteilung
- qᵢ: Qualität
- x: Observationswert
- y: Zielwert
- z: Aktionswert
- {}: Menge

## Patentansprüche

1. Regelkreis zur Regelung eines Prozesses, insbesondere eines Verbrennungsprozesses, in einer Anlage (1), insbesondere einem Kraftwerk, einer Müllanlage oder einem Zementwerk, mit
a) einer Strecke (3),
b) wenigstens einer Messvorrichtung (5) zum Erfassen von Observationswerten (x) der Strecke (3),
c) wenigstens einer von Aktionswerten (z) ansteuerbaren, auf die Strecke (3) einwirkenden Stellvorrichtung (9) und
d) einem Regler (11), an welchen die Messvorrichtung (5) und die Stellvorrichtung (9) angeschlossen sind und welcher die Observationswerte (x) der Messvorrichtung (5) auswertet, den durch die Observationswerte (x) beschriebenen Zustand des Systems der Strecke (3) anhand von Zielwerten (y) bewertet, zur Erreichung der Zielwerte (y) geeignete Aktionswerte (z) aus-wählt und die Stellvorrichtung (9) ansteuert,
**dadurch gekennzeichnet, dass**
e) der Regler (11) einen Eingangswandler (11a) aufweist, welcher aus den Observationswerten (x) wenigstens eine Wahrscheinlichkeitsverteilung (P(x)) der Observationswerte (x) bildet,
f) der Regler (11) einen Aktions-Generator (11f) aufweist, welcher eine Menge {zᵢ} möglicher Aktionswerte erzeugt und ein weiterer oder der gleiche Eingangswandler (11a) hieraus eine Menge {P(zᵢ)} zugeordneter Verteilungen bildet,
g) der Regler (11) eine Prozessmodelleinheit (11b) mit einem gespeicherten Prozessmodell aufweist, mittels dessen der Regler (11) aus der Wahrscheinlichkeitsverteilung (P(x)) der Observationswerte (x) und der Menge {P(zᵢ)} der den möglichen Aktionswerten {zᵢ} zugeordneten Verteilungen, welche in die Prozessmodelleinheit (11b) gegeben werden, eine Menge {P(yᵢ)} von Verteilungen wahrscheinlicher künftiger Zustände des Systems prognostiziert,
h) der Regler (11) die Menge {P(yᵢ)} von Verteilungen wahrscheinlicher künftiger Zustände des Systems anhand der Zielwerte (y) und/oder deren Verteilungen (P(y)), insbesondere in einer Bewertereinheit (11c), bewertet und wenigstens eine Wahrscheinlichkeitsverteilung (P(z)) der geeigneten Aktionswerte (z), insbesondere in einer Auswahleinheit (11d), auswählt, und
i) der Regler (11) einen Ausgangswandler (11e) aufweist, welcher aus der Wahrscheinlichkeitsverteilung (P(z)) der Aktionswerte (z) wenigstens einen Aktionswert (z) bildet, wobei die angesteuerten Stellvorrichtungen (9) aufgrund der Aktionswerte (z) zugeordnete konkrete Aktionen ausführen.

2. Regelkreis nach Anspruch 2 und 3, **dadurch gekennzeichnet, dass** der Regler (11) eine konventionelle Regeleinheit (11g) aufweist, welche den Eingangswandler (11a), die diversen Einheiten (11b, 11c, 11d) und den Ausgangswandler (11e) überbrückt.

3. Regelkreis nach einem der vorhergehenden Ansprüche, **dadurch gekennzeichnet, dass** die Bewertereinheit (11c) mittels einer Qualität (qᵢ) die Menge {P(yᵢ)} von Verteilungen wahrscheinliche künftiger Zustände des Systems anhand der Zielwerte (y) und/oder deren Verteilungen (P(y)) bewertet.

4. Regelkreis nach einem der vorhergehenden Ansprüche, **dadurch gekennzeichnet, dass** das Prozessmodell als neuronales Netz in der Prozessmodelleinheit (11b) implementiert ist.

5. Regelkreis nach einem der vorhergehenden Ansprüche, **dadurch gekennzeichnet, dass** das Prozessmodell in der Prozessmodelleinheit (11b) auf Vorwärts-und Rückwärtsrechnung ausgelegt ist.

6. Regelkreis nach einem der vorhergehenden Ansprüche, **dadurch gekennzeichnet, dass** die Strecke (3) einen Ofen (13) zum Umsetzen von Gut (G) unter Zufuhr von Luft (L) mittels des Verbrennungsprozesses unter Ausbildung wenigstens eines Flammenkörpers (F) aufweist.

7. Regelkreis nach einem der vorhergehenden Ansprüche, **dadurch gekennzeichnet, dass** die Stellvorrichtung (9) auf die Strecke (3) einwirkt, indem sie wenigstens der Zufuhr von Gut (G) und/oder Luft (L) steuert.

## Claims

1. A control loop for regulating a process, in particular a combustion process, in a plant (1), in particular a power-generating plant, a waste-treatment plant or a cement works, having
a) a controlled system (3),
b) at least one measuring device (5) to record observation values (x) of the controlled system (3),
c) at least one adjustment device (9) controllable by action values (z) and acting on the controlled system (3), and
d) a regulator (11) to which the measuring device (5) and the adjustment device (9) are connected and that analyzes the observation values (x) of the measuring device (5), and on the basis of target values (y) evaluates the state of the system described by the observation values (x), and that also selects appropriate action values (z) in order to achieve the target values (y), and controls the adjustment device (9),
**characterized in that**
e) the regulator (11) has an input converter (11a) which, from the observation values (x), predicts at least one probability distribution (P(x)) of the obeservation values (x),
f) the regulator (11) has an action generator (11f) which generates a set {zᵢ} of possible action values and that a further or the same input converter (11a) forms therefrom a set {P(zᵢ)} of assigned distributions,
g) the regulator (11) is provided with a process model unit (11b) having a stored process mode, by means of which the regulator (11) predicts from the probability distribution (P(x)) of the.observation values (x) and the set {P(zᵢ)} of distributions assigned to the possible action values {zi}, which are given into the process model unit (11b), a set {P(yᵢ)} of distributions of probable future states of the system,
h) the regulator (11) evaluates the set {P(yᵢ)} of distributions of probable future states of the system on the basis of the target values (y) and/or of their distributions (P(y)), in particular in an evaluation unit (11c), and selects at least one probability distribution (P(z)) of the suitable action values (z), in particular in a selection unit (11d) and
i) the regulator (11) has an output converter (11e) that creates at least one action value (z) from the probability distribution (P(z)) of the action values (z), the controlled adjustment devices (9) carrying out assigned, concrete actions, based on the action values (z).

2. A control loop according to Claims 2 and 3, **characterized in that** the regulator (11) has a conventional regulating unit (11g) that bypasses the input converter (11a), the various units (11b, 11c, 11d) and the output converter (11e).

3. A control loop according to any of the preceding claims, **characterized in that** the evaluation unit (11c), by means of a quality (qᵢ), evaluates the set {P(yᵢ)} of distributions of probable future states of the system on the basis of the target values (y) and/or of their distributions (P(y)).

4. A control loop according to any of the preceding claims, **characterized in that** the process model is implemented as a neural network in the process model unit (11b).

5. A control loop according to any of the preceding claims, **characterized in that** the process model is configured for forward and backward calculation in the process model unit (11b).

6. A control loop according to any of the preceding claims, **characterized in that** the controlled system (3) has a furnace (13) for converting material (G) by means of the combustion process, with air (L) being supplied and at least one flame body (F) being formed.

7. A control loop according to any of the preceding claims, **characterized in that** the adjustment device (9) acts on the controlled system (3) by controlling at least the supply of material (G) and/or of air (L).

## Revendications

1. Circuit de régulation pour la régulation d'un processus, en particulier d'un processus de combustion, dans une installation (1), en particulier une centrale électrique, une déchetterie ou une cimenterie, avec
a) un parcours (3) ;
b) au moins un dispositif de mesure (5) pour déterminer des valeurs d'observation (x) du parcours (3) ;
c) au moins un dispositif de réglage (9) pouvant être commandé par des valeurs d'action (z) et agissant sur le parcours (3) ; et
d) un régulateur (11), auquel le dispositif de mesure (5) et le dispositif de réglage (9) sont reliés et qui évalue les valeurs d'observation (x) du dispositif de mesure (5), estime l'état décrit par les valeurs d'observation (x) du système du parcours (3) à l'aide de valeurs cibles (y), sélectionne des valeurs d'action (z) appropriées pour atteindre les valeurs cibles (y), et commande le dispositif de réglage (9),
**caractérisé par le fait que**
e) le régulateur (11) comprend un convertisseur d'entrée (11a), lequel, à partir des valeurs d'observation (x), forme au moins une distribution de probabilité (P(x)) des valeurs d'observation (x) ;
f) le régulateur (11) comprend un générateur d'action (11f), qui génère un ensemble {zᵢ} de valeurs d'action possibles, et un autre ou le même convertisseur d'entrée (11a) forme à partir de celui-ci un ensemble {P(zᵢ)} de distributions associées ;
g) le régulateur (11) comprend une unité de modèle de processus (11b) comportant un modèle de processus enregistré, au moyen duquel le régulateur (11) pronostique un ensemble {P(yᵢ)} de distributions d'états futurs probables du système à partir de la distribution de probabilité (P(x)) des valeurs d'observation (x) et de l'ensemble {P(zᵢ)} des distributions associées aux valeurs d'action possibles {zᵢ}, lesquels sont distribués à l'unité de modèle de processus (11b) ;
h) le régulateur (11) évalue l'ensemble {P(yᵢ)} de distributions d'états futurs probables du système à l'aide des valeurs cibles (y) et/ou de leurs distributions (P(y)), en particulier dans une unité d'évaluation (11c), et sélectionne au moins une distribution de probabilité (P(z)) des valeurs d'actions appropriées (z), en particulier dans une unité de sélection (11d) ; et
i) le régulateur (11) comprend un convertisseur de sortie (11e), lequel, à partir de la distribution de probabilité (P(z)) des valeurs d'action (z), forme au moins une valeur d'action (z), les dispositifs de réglage commandés (9) exécutant des actions concrètes associées sur la base des valeurs d'action (z).

2. Circuit de régulation selon la revendication 1, **caractérisé par le fait que** le régulateur (11) comprend une unité de régulation conventionnelle (11g), laquelle court-circuite le convertisseur d'entrée (11a), les diverses unités (11b, 11c, 11d) et le convertisseur de sortie (11e).

3. Circuit de régulation selon l'une des revendications précédentes, **caractérisé par le fait que** l'unité d'évaluation (11c) évalue au moyen d'une qualité (qᵢ) l'ensemble {P(yᵢ)} de distributions d'états futurs probables du système à l'aide des valeurs cibles (y) et/ou de leurs distributions (P(y)).

4. Circuit de régulation selon l'une des revendications précédentes, **caractérisé par le fait que** le modèle de processus est implémenté sous forme de réseau neuronal dans l'unité de modèle de processus (11b).

5. Circuit de régulation selon l'une des revendications précédentes, **caractérisé par le fait que** le modèle de processus est configuré dans l'unité de modèle de processus (11b) par un calcul au plus tôt et par un calcul au plus tard.

6. Circuit de régulation selon l'une des revendications précédentes, **caractérisé par le fait que** le parcours (3) comprend un four (13) destiné à transformer un bien (G) sous injection d'air (L), au moyen du processus de combustion, avec formation d'au moins un corps de flamme (F) .

7. Circuit de régulation selon l'une des revendications précédentes, **caractérisé par le fait que** le dispositif de réglage (9) agit sur le parcours (3), dans lequel il commande au moins l'alimentation du bien (G) et/ou d'air (L).
